# EUROPÄISCHE PATENTANMELDUNG

(11) **EP 1 956 294 A1**
(43) Veröffentlichungstag der Anmeldung: **13.08.2008**
(21) Anmeldenummer: 07002562.2
(22) Anmeldetag: 06.02.2007
(51) Int. Cl.: F23K 5/20

(54) **Feuerungsanlage und Verfahren zum Betrieb einer Feuerungsanlage**

(71) Anmelder: SIEMENS AKTIENGESELLSCHAFT, 80333 München (DE)
(72) Erfinder: Hofmann, Daniel, Dr., 91080 Uttenreuth (DE)

(57) **Zusammenfassung**

Die Erfindung betrifft ein Verfahren zum Betrieb einer Feuerungsanlage (12) mit einer Brennkammer (20), bei dem ein Brennstoff vorgewärmt wird und vorgewärmt einer Verbrennung in der Brennkammer (20) zugeführt wird. Um bei einem Teillastbetrieb einen hohen Betriebswirkungsgrad der Feuerungsanlage (12) zu erreichen, wird vorgeschlagen, dass die Vorwärmtemperatur des Brennstoffs in Abhängigkeit einer sich aus der Verbrennung ergebenden Größe, insbesondere einer Last der Feuerungsanlage (12), eingestellt wird.

## Beschreibung

Die Erfindung betrifft ein Verfahren zum Betrieb einer Feuerungsanlage mit einer Brennkammer, bei dem ein Brennstoff vorgewärmt wird und vorgewärmt einer Verbrennung in der Brennkammer zugeführt wird. Außerdem betrifft die Erfindung eine Feuerungsanlage mit einer Brennkammer zur Verbrennung von Brennstoff, einer Brennstoffzuführung zur Brennkammer und einem Erwärmungsmittel zum Vorwärmen von die Brennstoffzuführung durchströmendem Brennstoff.

Bei einer Feuerungsanlage wird gasförmiger oder flüssiger Brennstoff einem Brenner in einer Brennkammer zugeführt und dort zur Erhitzung eines Arbeitsmediums verbrannt, das dann zur Leistung von Arbeit zur Verfügung steht. So wird beispielsweise in einer Gasturbine Umgebungsluft in einem Verdichter auf einen hohen Druck verdichtet, in einer Brennkammer mit Brenngas vermischt und anschließend verbrannt. Das aus der Verbrennung entstehende, unter sehr hohem Druck stehende heiße Abgas wird zu einer Turbine gelenkt, die durch eine Entspannung des Abgases angetrieben wird. Die Welle der Turbine ist verbunden mit der Welle eines Generators zur Erzeugung elektrischer Energie.

Da eine Gasturbine eine hohe Abwärme erzeugt, wird sie besonders effektiv in Verbindung mit einer Dampfturbine in einem kombinierten Prozess eingesetzt, bei dem die von der Gasturbine erzeugte Abwärme für einen Betrieb der Dampfturbine genutzt wird. Eine Gasturbinenanlage und eine Dampfturbinenanlage werden hierbei zu einer Kraftwerkseinheit mit einem Gesamtwirkungsgrad verschmolzen.

Zur Verbesserung des Wirkungsgrads der Gasturbine bzw. der Kraftwerkseinheit ist es beispielsweise aus der EP 0 918 151 B1 bekannt, den Brennstoff vor der Verbrennung vorzuwärmen.

Hierzu wird Wärme aus einem Prozessschritt entnommen, bei der die hierdurch verursachte Wirkungsgradverschlechterung geringer ist als die erreichte Wirkungsgradverbesserung durch die Brennstoffvorwärmung. Da die Wirkungsgradverschlechterung mit der Temperatur des entnommenen Vorwärmmediums steigt, sinkt die Gesamtwirkungsgradverbesserung mit steigender Vorwärmtemperatur.

Es ist die Aufgabe der vorliegenden Erfindung, eine Feuerungsanlage und ein Verfahren zum Betrieb einer Feuerungsanlage anzugeben, mit denen ein hoher Betriebswirkungsgrad erzielbar ist.

Die auf das Verfahren gerichtete Aufgabe wird durch ein Verfahren der eingangs genannten Art gelöst, bei dem erfindungsgemäß die Vorwärmtemperatur des Brennstoffs in Abhängigkeit einer sich aus der Verbrennung ergebenden Größe eingestellt wird. Es kann auch bei einem Teillastbetrieb der Feuerungsanlage eine am Wirkungsgrad orientierte Vorwärmung vorgenommen werden.

Die Erfindung geht hierbei von der Überlegung aus, dass die maximale Vorwärmtemperatur des Brennstoffs von Stabilitätskriterien der Verbrennung vorgegeben wird. Der Brennstoff kann nur so weit erhitzt werden, wie eine stabile Verbrennung mit ihm gewährleistet ist. Zur Bestimmung der optimalen Vorwärmtemperatur werden die Stabilitätskriterien für die Grundlast, in der die Feuerungsanlage meist betrieben wird, ermittelt und die Vorwärmung des Brennstoffs wird entsprechend eingestellt.

Die Erfindung geht von der weiteren Überlegung aus, dass von Kraftwerken - bedingt durch die immer höher werdende Flexibilität des Strommarkts - in verstärktem Maße eine variable Leistungsabgabe verlangt wird. Bei einer Feuerungsanlage wird es daher immer wichtiger, auch im Teillastbetrieb mit einer hinsichtlich des Wirkungsgrads guten Vorwärmtemperatur zu arbeiten. Da die Stabilität der Verbrennung auch abhängig ist von der momentanen Leistung oder Last der Feuerungsanlage, kann eine Berücksichtigung der Leistung bei der Einstellung der Vorwärmtemperatur dazu genutzt werden, die Vorwärmtemperatur in weiten Lastbereichen der Feuerungsanlage hinsichtlich des Wirkungsgrads zu optimieren.

Auf diese Weise kann durch eine betriebsabhängige Einstellung der Vorwärmtemperatur der Wirkungsgrad der Feuerungsanlage auch in anderen Betriebsarten als einem Grundlastbetrieb hoch gehalten werden.

Hierbei kann die sich aus der Verbrennung ergebende Größe die Leistung oder Last der Feuerungsanlage sein, die mit der Stärke der Verbrennung zunimmt. Da die Last bzw. Leistung üblicherweise regelmäßig bestimmt wird, bietet sich die Steuerung der Vorwärmtemperatur über die Last an. Die Leistung ist hierbei eine absolute Größe, die beispielsweise anhand einer Kraft gemessen oder anhand elektrischer Größen an einem Generator ermittelt werden kann. Die Last ist eine äquivalente aber relative Größe, die sich auf die unter momentan gegebenen Bedingungen, z.B. Art des Brennstoffs, Luftfeuchte, usw., erzielbare Leistung bezieht.

Bei einer Rotationsmaschine kann die sich aus der Verbrennung ergebende Größe die Drehzahl einer durch die Verbrennung angetriebenen Komponente sein. Insbesondere ist die Größe die momentane Größe, wobei auch ein zeitnaher Versatz von bis zu 1 Minute möglich ist, wodurch der Brennstoff beispielsweise im Hinblick auf eine Lastverringerung bereits kurz von der Lastverringerung stärker vorgewärmt wird. Die Größe ist hierbei keine Nenngröße der Feuerungsanlage sondern eine sich unmittelbar oder mittelbar aus der Verbrennung ergebende Größe, die beispielsweise aus einem Messwert bestimmt wird.

Die Feuerungsanlage ist vorteilhafterweise eine Gasturbinenanlage mit einer Gasturbine. Auch eine Gas- und Dampfturbinenanlage ist denkbar oder ein Dampfkraftwerk. Der Betrieb der Feuerungsanlage ist zweckmäßigerweise ein sich von einem Anfahrbetrieb der Feuerungsanlage unterscheidender regulärer Betrieb. Der Brennstoff ist zweckmäßigerweise gasförmig oder flüssig.

In einer vorteilhaften Ausgestaltung der Erfindung wird die Vorwärmtemperatur des Brennstoffs bei einer Teillast der Feuerungsanlage höher eingestellt als bei einer Grundlast. Bei einer Teillast ist die Verbrennung bei einer höheren Brennstofftemperatur noch stabil als bei der Volllast oder der Grundlast der Feuerungsanlage. Somit kann die Vorwärmtemperatur bei einer Teillast angehoben und hierdurch der Wirkungsgrad der Feuerungsanlage bei der Teillast angehoben werden.

In einer weiteren vorteilhaften Ausführungsform der Erfindung wird die Vorwärmtemperatur des Brennstoffs in Abhängigkeit von einer Flammstabilität in der Brennkammer eingestellt. Auf diese Weise kann die Vorwärmtemperatur in Richtung eines hohen Wirkungsgrads beispielsweise stets so eingestellt werden, dass die Verbrennung gerade noch stabil ist. Die sich aus der Verbrennung ergebende Größe kann hierbei die Flammstabilität bzw. eine Druckfluktuation in der Brennkammer sein, die als solche oder z.B. als Brummen der Brennkammer gemessen werden kann.

Steht eine Wärmequelle zur Verfügung, mit der der Brennstoff mit einem nur geringen Wirkungsgradverlust auf eine hohe Temperatur vorgewärmt werden kann, ist eine stets maximal mögliche Vorwärmtemperatur vorteilhaft. Daher wird die Vorwärmtemperatur des Brennstoffs in einer weiteren vorteilhaften Variante der Erfindung grundsätzlich auf einen maximal möglichen Wert unter Einhaltung einer vorbestimmten Flammstabilität eingestellt. "Grundsätzlich" kann in diesem Zusammenhang stets bei einem regulärer Betrieb, stets bei einem zeitlich unveränderten Betrieb oder stets bei einem sonstigen Betrieb sein, der frei von Betriebsunregelmäßigkeiten ist.

Bei einem flexiblen Einsatz der Feuerungsanlage wird diese je nach momentanem Energiebedarf häufig an- und abgefahren. Da ein Anfahren ein längerer Prozess ist, ist es vorteilhaft, bereits beim Anfahren mit einem hohen Wirkungsgrad arbeiten zu können. Das erfindungsgemäße betriebsabhängige Einstellen der Vorwärmtemperatur ist auch auf Anfahrprozesse anwendbar, so dass daher als weitere Erfindungsvariante vorgeschlagen wird, dass der Brennstoff bereits bei einem Anfahren der Feuerungsanlage erwärmt wird und die sich aus der Verbrennung ergebende Größe eine Größe eines Anfahrparameters der Feuerungsanlage ist. Die Größe kann eine Anlagentemperatur sein oder - insbesondere bei einer Gasturbine - eine Drehzahl von dessen Läufer.

Die Flammstabilität ist von einer Reihe von Parametern abhängig, beispielsweise dem Luftdruck, der Luftfeuchtigkeit, der Steifigkeit der Brennstoffversorgung, von Strömungszuständen in der Brennkammer usw. Je nach momentaner Flammstabilität kann der Brennstoff mehr oder weniger vorgewärmt werden. Eine gute Vorwärmung kann in diesem komplexen System von Parametern erreicht werden, wenn die Vorwärmtemperatur des Brennstoffs in einem ersten Schritt in Abhängigkeit einer hinterlegten Zuordnung voreingestellt wird und in einem zweiten Schritt mit Hilfe eines Messergebnisses feineingestellt wird. Die hinterlegte Zuordnung kann die sich aus der Verbrennung ergebenden Größe - beispielsweise die momentane Leistung der Anlage - mit einer Vorwärmtemperatur verknüpfen, so dass sich aus ihr eine vorläufige Vorwärmtemperatur ergibt, auf die voreingestellt wird. Durch das Messen eines weiteren Parameters - beispielsweise einer Flammstabilität durch Messen einer Druckfluktuation - kann die Vorwärmtemperatur hinsichtlich des Wirkungsgrads weiter verbessert werden.

Die auf die Feuerungsanlage gerichtete Aufgabe wird durch eine Feuerungsanlage der eingangs genannten Art gelöst, die erfindungsgemäß ein Steuermittel umfasst zum Einstellen der Vorwärmtemperatur des Brennstoffs in Abhängigkeit einer sich aus der Verbrennung ergebenden Größe. Die Vorwärmtemperatur kann betriebsbedingt eingestellt und es kann ein hoher Wirkungsgrad der Feuerungsanlage bei verschiedenen Betriebsarten erzielt werden.

Das Steuermittel kann eine Steuereinheit sein mit einem entsprechenden Steuerprogramm, das beispielsweise eine hinterlegte Zuordnung eines oder mehrerer Betriebsparameter der Feuerungsanlage zu Vorwärmtemperaturen enthält. Die Brennstoffzuführung ist ein im Betrieb Brennstoff führendes Mittel, das eine oder mehrere Leitungen umfassen kann.

In einer vorteilhaften Weiterbildung der Erfindung weist das Erwärmungsmittel mindestens zwei in der Brennstoffzuführung angeordnete Wärmetauscher auf, die mit Heizstufen unterschiedlicher Betriebstemperatur verbunden sind. Es kann Wärme sowohl von einem relativ kühlen Wärmeträger mit einem nur geringen Wirkungsgradverlust entnommen werden als auch zusätzlich Wärme von einem wärmeren Wärmeträger zum weiteren Erwärmen des Brennstoffs auf eine hohe und wirkungsgradgünstige Temperatur. Die Heizstufen können in einem Hoch-, Mittel- oder Niederdruckvorwärmer sein, beispielsweise in Form von Wärmetauschern, in einer Abgasführung einer Gasturbine oder als ein Kühlelement in der Anlage ausgeführt sein, beispielsweise zur Kühlung von Turbinenschaufeln.

In einer alternativen und kostengünstigen Ausgestaltung der Erfindung umfasst das Erwärmungsmittel nur einen Wärmetauscher, der im Betrieb mit heißem Vorwärmmedium durchströmt wird.

Vorteilhafterweise sind die Wärmetauscher seriell in der Brennstoffzuführung angeordnet. So kann der Brennstoff zunächst von einem Wärmetauscher erwärmt und anschließend vom zweiten Wärmetauscher nacherwärmt werden. Ist der mit der kühleren Heizstufe verbundene Wärmetauscher im Brennstoffstrom vor dem mit der wärmeren Heizstufe verbundenen Wärmetauscher angeordnet, so kann die Heizenergie des wärmeren hinteren Wärmetauschers auf ein Nachheizen des Brennstoffs beschränkt werden, womit ein geringer Wärmeverlust der wärmeren Heizstufe verbunden ist.

In einer alternativen Ausgestaltung der Erfindung sind die Wärmetauscher parallel in der Brennstoffzuführung angeordnet, wodurch eine hohe Flexibilität bei der Auswahl der Wärmezufuhr zum Brennstoff erreicht werden kann.

Mit Vorteil umfasst die Brennstoffzuführung zumindest zwei parallele, jeweils einen Brennstoffteilstrom zu einem der Wärmetauscher führende Leitungen, wobei die Brennstoffteilströme durch die Leitungen nach den Wärmetauschern vereinigt werden. Je nach Vorwärmtemperatur können die Brennstoffströme verteilt werden, so dass die Heizwärme aus vor allem dem kühleren Wärmetauscher möglichst vollständig nutzbar ist. Das Steuermittel kann hierbei die Teilströme zur Erzielung der gewünschten Brennstofftemperatur mengenmäßig auf die beiden Leitungen aufteilen.

Ein Wirkungsgradverlust durch das Vorwärmen kann gering gehalten werden, wenn das Steuermittel dazu vorgesehen ist, vorrangig den mit der kühleren Heizstufe verbundenen Wärmetauscher auszulasten und den anderen Wärmetauscher zur weiteren Erwärmung des Brennstoffs heranzuziehen. Als weitere Erwärmung kann hierbei eine zusätzliche Erwärmung über die Erwärmung durch den kühleren Wärmetauscher hinaus gesehen werden. Bei einer seriellen Anordnung kann der wärmere Wärmetauscher zur weiteren Temperaturerhöhung des angewärmten Brennstoffs dienen, und bei einer parallelen Anordnung zur höheren Erwärmung des einen Teilstroms.

Insbesondere bei einem Betriebsverfahren derart, dass die Vorwärmtemperatur des Brennstoffs in einem ersten Schritt in Abhängigkeit einer hinterlegten Zuordnung voreingestellt wird und in einem zweiten Schritt mit Hilfe eines Messergebnisses feineingestellt wird ist es vorteilhaft, wenn das Steuermittel bezüglich der Steuerung der Vorwärmtemperatur selbstlernend ausgeführt ist, also mit einem entsprechenden Programm versehen ist. Hierbei kann beispielsweise die abgespeicherte Zuordnung durch das Selbstlernen an die Anlage und/oder vorrangige Betriebsmodi des Betreibers immer weiter angepasst werden, so dass eine Voreinstellung immer genauer wird.

Die Erfindung wird anhand von Ausführungsbeispielen näher erläutert, die in den Zeichnungen dargestellt sind. Es zeigen:
- FIG 1: ein Diagramm, bei dem der Wirkungsgrad einer Gasturbinenanlage in Abhängigkeit von einer Vorwärmtemperatur des in der Gasturbine der Gasturbinenanlage verbrannten Brennstoffs aufgetragen ist,
- FIG 2: ein Diagramm, bei dem der Wirkungsgrad einer GuD-Anlage in Abhängigkeit von einer Vorwärmtemperatur des Brennstoffs unter Berücksichtigung der für die Vorwärmung benötigen Energie aufgetragen ist,
- FIG 3: eine GuD-Anlage mit einem Erwärmungsmittel zum Vorwärmen von Brennstoff,
- FIG 4: ein Schema der Brennstoffzuführung zu einer Brennkammer einer Gasturbinenanlage,
- FIG 5: eine Darstellung des Erwärmungsmittels zum Vorwärmen von Brennstoff und
- FIG 6: eine Darstellung eines alternativen Erwärmungsmittels zum Vorwärmen von Brennstoff.

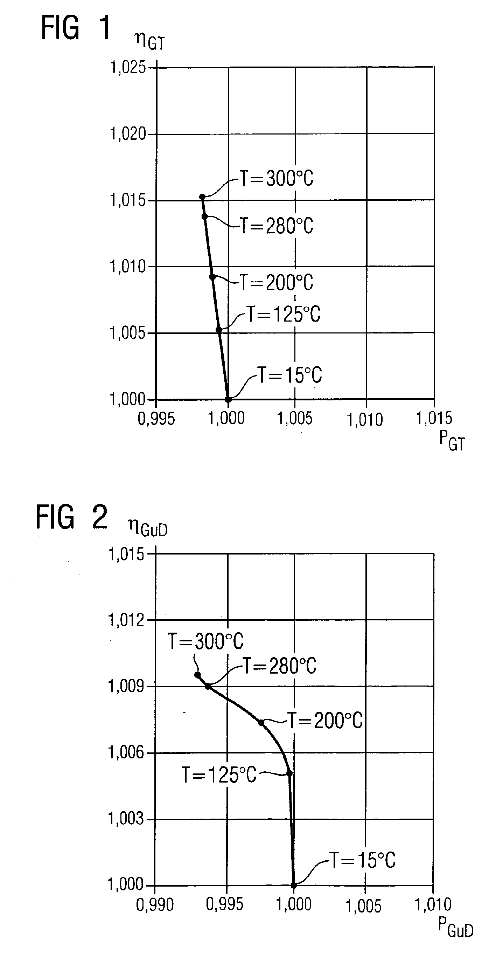

FIG 1 zeigt ein Diagramm, bei dem der Wirkungsgrad η_{GT} einer Gasturbinenanlage einer GuD-Anlage (Gas- und Dampfturbinenanlage) in Abhängigkeit von der Vorwärmtemperatur des in der Brennkammer der Gasturbinenanlage verbrannten Brennstoffs aufgetragen ist. Als Ausgangspunkt ist eine Brennstofftemperatur von 15°C gewählt, bei dem der Wirkungsgrad η_{GT} der Gasturbinenanlage mit 100% und die Leistung der Gasturbinenanlage ebenfalls mit 100% angegeben ist. Mit steigender Vorwärmtemperatur des in den Brennraum gegebenen Brennstoffs steigt der Wirkungsgrad η_{GT} linear an und die Leistung P_{GT} der Gasturbine sinkt leicht ab. Bei einer Vorwärmtemperatur des Brennstoffs von 300°C kann ein Wirkungsgrad η_{GT} von 101,5% erreicht werden, wobei die Leistung P_{GT} auf 99,8% etwas abgefallen ist.

Wird die zur Vorwärmung benötigte Energie, die einem Arbeitsprozess der GuD-Anlage entnommen wird, in die Wirkungsgradberechung einbezogen, so ergibt sich ein von der Brennstoffvorwärmung abhängiger Wirkungsgrad η_{GuD} der gesamten GuD-Anlage, der in FIG 2 dargestellt ist. Bis etwa 125°C steigt der Wirkungsgrad η_{GuD} der GuD-Anlage linear an. Bei niedrigen Vorwärmtemperaturen kann zur Vorwärmung Energie verwendet werden, die im Dampfturbinenprozess nicht verwendet wird. Ab einer Vorwärmtemperatur von etwa 125°C wird auch im Dampfturbinenprozess nutzbare Wärme zur Vorwärmung verwendet, die somit nicht mehr zur Leistungserbringung der Dampfturbine zur Verfügung steht. Die Leistung P_{GuD} der GuD-Anlage sinkt daher mit steigender Vorwärmtemperatur zunehmend. Dennoch ist eine Steigerung des Wirkungsgrads η_{GuD} der GuD-Anlage bis zu Vorwärmtemperaturen von 300°C und mehr erreichbar, so lange, wie die Verbrennung in der Brennkammer stabil bleibt.

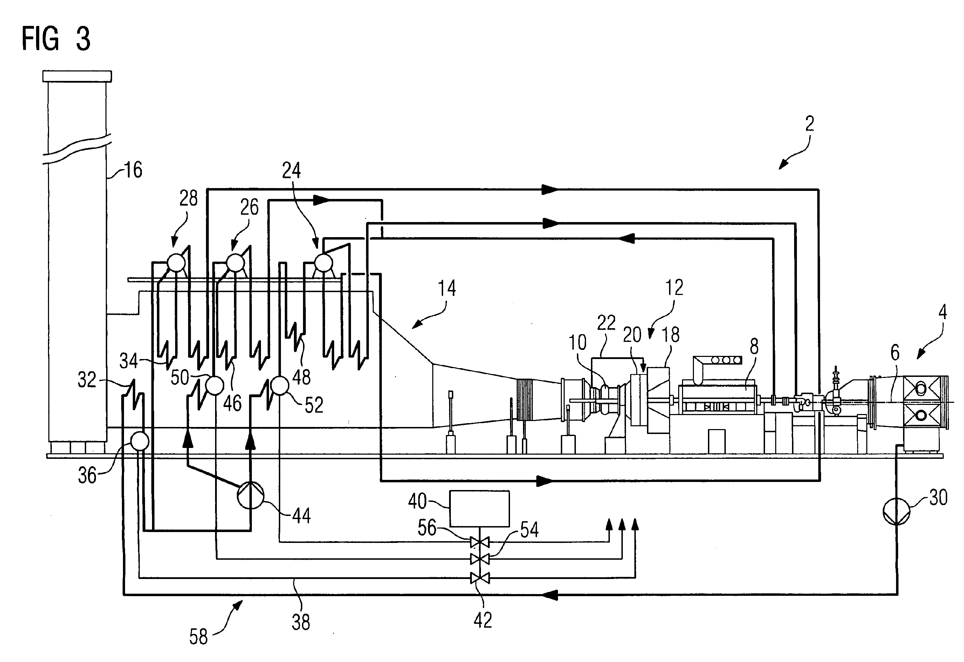

In FIG 3 ist eine GuD-Anlage 2 in einer schematischen Übersicht dargestellt. Sie umfasst eine Dampfturbine 4, deren Läufer über eine Welle 6 mit einem Generator 8 verbunden ist. Dieser ist wiederum mit dem Läufer einer Gasturbine 10 verbunden, die Teil einer Feuerungsanlage 12 ist. Abgasseitig der Gasturbine 10 ist ein Abhitzedampferzeuger 14 angeordnet, der mit dem Abgas der Gasturbine 10 beheizt wird. Die Abgase verlassen die GuD-Anlage 2 über einen Kamin 16.

Die Feuerungsanlage 12 umfasst einen Verdichter 18, zum Verdichten von Verbrennungsluft, die einer Brennkammer 20 zugeführt wird. Dort wird sie mit vorgewärmtem Brennstoff vermischt und das Gemisch wird verbrannt. Wärme zum Vorwärmen des Brennstoffs kann aus verschiedenen Stellen der GuD-Anlage 2 entnommen werden. So kann verdichtete Verbrennungsluft vom Verdichter 16 über zum Turbinenteil der Gasturbine 10 geführt und dort zur Kühlung von Turbinenschaufeln verwendet werden. Die derart erhitzte Luft wird über Leitungen 22 zurückgeführt und zur Vorwärmung des Brennstoffs verwendet.

Alternativ oder zusätzlich kann Wärme aus dem Dampfsystem der GuD-Anlage 2 entnommen werden, beispielsweise aus dem Abhitzedampferzeuger 14. Der Abhitzedampferzeuger 14 umfasst eine Hochdruckstufe 24, eine Mitteldruckstufe 26 und eine Niederdruckstufe 28. Das aus der Gasturbine 10 austretende heiße Abgas durchströmt zunächst die Hochdruckstufe 24, die am stärksten erwärmt wird, danach die Mitteldruckstufe 26 und zuletzt die Niederdruckdruckstufe 28. Kondensat wird mittels einer Kondensatpumpe 30 zu einem Vorwärmer 32 gepumpt, wo das Kondensat vorgewärmt wird. Bevor das vorgewärmte Kondensat zu einem Niederdruckvorwärmer 34 geführt wird, kann es in einer beispielsweise als Wärmetauscher ausgeführten Heizstufe 36 Wärme zur niedertemperierten Vorwärmung des Brennstoffs abgeben. Über Leitungen 38 und durch ein von einem Steuermittel 40 angesteuerten Ventil 42 gelangt das Vorwärmmedium zu einem in FIG 2 nicht dargestellten Wärmetauscher zur Übertragung der Wärme auf den Brennstoff.

Über eine Speisewasserpumpe 44 wird das vorgewärmte Kondensat außerdem unter mittlerem und hohem Druck einem Mitteldruckvorwärmer 46 bzw. einem Hochdruckvorwärmer 48 zugeführt. Zuvor kann es als Wärmeträger in einer ebenfalls als Wärmetauscher ausgeführten Heizstufe 50 Wärme zur mitteltemperierten Vorwärmung des Brennstoffs abgeben. Optional kann eine noch heißere Heizstufe 52 zur hochtemperierten Vorwärmung des Brennstoffs vorgesehen sein. Die entsprechende Zuführung der Wärme zum Brennstoff wird durch das Steuermittel 40 mittels weiterer Ventile 54, 56 veranlasst. Durch die Anordnung der Heizstufen 36, 50, 52 im Abhitzedampferzeuger bzw. in dessen Nähe sind die Betriebstemperaturen der Heizstufen 36, 50, 52 verschieden. Je nach gewünschter Vorwärmtemperatur des Brennstoffs wird Wärme aus dem Wärmeträger nur in der kühlsten Heizstufe 36 oder auch in der Heizstufe 50 oder sogar der Heizstufe 52 entnommen.

Die Heizstufen 36, 50, 52, die Steuereinheit 40 und die Leitungen 38 mit den Ventilen42, 54, 56 sowie der nicht dargestellte Wärmetauscher zur Wärmeübertragung auf den Brennstoff sind Bestandteil eines Erwärmungsmittels 58 zum Vorwärmen des Brennstoffs.

In einer hinsichtlich der Investitionskosten günstigen Alternative umfasst das Erwärmungsmittel wärmeaufnahmeseitig nur einen einzigen Wärmetauscher, beispielsweise den der Heizstufe 50, der Wärme für alle Vorwärmtemperaturen des Brennstoffs dem Wärmeträger entnimmt.

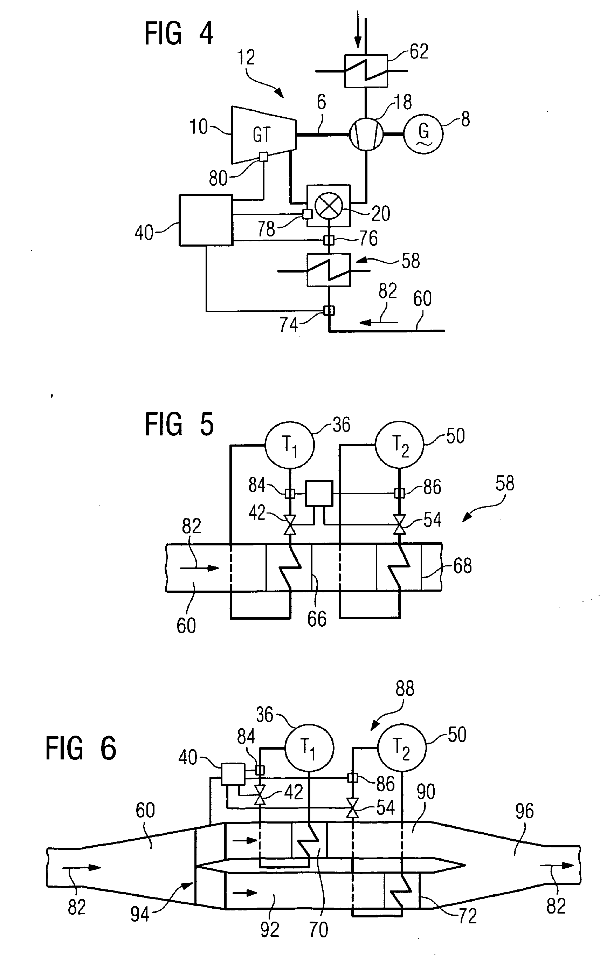

Die Feuerungsanlage 12 mit der Gasturbine 10 und einer Brennstoffzuführung 60 zur Brennkammer 20 ist in FIG 4 etwas detaillierter schematisch dargestellt. Zur Brennkammer 20 geführte Verbrennungsluft wird in einem Wärmetauscher 62 vorgewärmt. Der Brennstoff wird mit dem in FIG 4 nur schematisch dargestellten Erwärmungsmittel 58 vorgewärmt, das wärmeabgabeseitig einen oder mehrere Wärmetauscher 66, 68, 70, 72 (siehe FIGen 5 und 6) umfassen kann. Die Brennstoffvorwärmung wird vom Steuermittel 40 gesteuert, das über einen Sensor 74 die Temperatur des noch unangewärmten Brennstoffs und über einen Sensor 76 die Temperatur des vorgewärmten Brennstoffs erfasst. Eine Flammstabilität wird von dem Steuermittel 40 über einen anderen Sensor 78 an oder in der Brennkammer 20 bestimmt. Mittels eines weiteren Sensors 80, der an der Gasturbine 10 oder an einer anderen geeigneten Stelle angeordnet sein kann, wird die Leistung oder Last der Feuerungsanlage 12 bzw. der Gasturbine 10 erfasst.

Wie in FIG 5 gezeigt, ist das Erwärmungsmittel 58 mit zwei Wärmetauschern 66, 68 ausgeführt, die seriell in der Brennstoffzuführung 60 angeordnet sind. Optional ist ein dritter Wärmetauscher möglich, der Wärme aus der optionalen Heizstufe 52 bezieht, der jedoch der Übersichtlichkeit halber nicht dargestellt ist. Der im Betrieb in Strömungsrichtung 82 strömende Brennstoff erreicht zuerst den Wärmetauscher 66, der mit der Heizstufe 36 verbunden ist. Die Heizstufe 36 wiederum wird vom Wärmeträger der Betriebstemperatur T₁ von 130°C, nämlich dem vorgewärmten Kondensat, mit Wärme versorgt. Hierdurch wird das Vorwärmmedium im Heizkreislauf des Wärmetauschers 66 auf z.B. 125°C erwärmt. Danach erreicht der Brennstoff den Wärmetauscher 68, der mit der Heizstufe 50 mit der höheren Betriebstemperatur verbunden ist. Die Heizstufe 50 wird von Wärmeträger der wärmeren Betriebstemperatur T₂ von 210°C, nämlich dem Kondensat, das dem Mitteldruckvorwärmer 46 zugeführt wird, mit Wärme versorgt. Hierdurch wird das Vorwärmmedium im Heizkreislauf des Wärmetauschers 68 auf z.B. 200°C erwärmt. Über Sensoren 84, 86 bestimmt das Steuermittel 40 jeweils die Temperatur des Vorwärmmediums in den beiden Heizkreisläufen des Erwärmungsmittels 58.

Ein alternatives Erwärmungsmittel 88 mit zwei parallel zueinander angeordneten Wärmetauschern 70, 72 ist in FIG 6 dargestellt. Die nachfolgende Beschreibung beschränkt sich im Wesentlichen auf die Unterschiede zum Ausführungsbeispiel in FIG 5, auf das bezüglich gleich bleibender Merkmale und Funktionen verwiesen wird. Im Wesentlichen gleich bleibende Bauteile sind grundsätzlich mit den gleichen Bezugszeichen beziffert. Jeder der Wärmetauscher 70, 72 ist in einer eigenen Leitung 90, 92 angeordnet, die parallel zueinander geführt sind. Der Brennstoff strömt durch ein von dem Steuermittel 40 angesteuerten Aufteilungsmittel 94, das den Brennstoffstrom auf die beiden Leitungen 90, 92 aufteilt. Nach der Vorwärmung des Brennstoffs werden die beiden Brennstoffströme in einer Vereinigungszone 96 wieder zusammengeführt zu einem Brennstoffstrom mit der gewünschten Vorwärmtemperatur.

Während des Betriebs der GuD-Anlage 2 wird die Vorwärmtemperatur des Brennstoffs in Abhängigkeit einer sich aus der Verbrennung ergebenden Größe eingestellt. In einer einfachen Variante der Erfindung ist dies die Last der Gasturbine 10 oder der GuD-Anlage 2, die von dem Steuermittel 40 beispielsweise mit Hilfe des Sensors 80 erfasst wird. Hierbei wird die Vorwärmtemperatur, also die im Sensor 76 gemessene Temperatur, mit der der Brennstoff die Brennkammer 20 erreicht, bei einem Teillastbetrieb der GuD-Anlage 2 oder der Gasturbine 10 bzw. der Feuerungsanlage 12 höher eingestellt als bei einem Grundlast- oder Volllastbetrieb.

In einer komplexeren Variante der Erfindung wird die Vorwärmtemperatur in Abhängigkeit von einer Flammstabilität der Verbrennung in der Brennkammer 20 eingestellt. Hierbei kann die Vorwärmtemperatur zunächst anhand der Last in Abhängigkeit einer in dem Steuermittel 40 hinterlegten Zuordnung voreingestellt werden, und dann anhand der Flammstabilität feineingestellt oder korrigiert werden. Die Flammstabilität erfasst das Steuermittel 40 beispielsweise mit Hilfe des Sensors 78, z.B. anhand einer Druckfluktuation in der Brennkammer 20 bzw. einem Brummen der Brennkammer 208. In einem zusätzlichen, von Bedienpersonal wählbaren Steuerprogramm des Steuermittels 40 wird die Vorwärmtemperatur grundsätzlich auf einen maximal möglichen Wert unter Einhaltung einer vorbestimmten Flammstabilität eingeregelt.

Unabhängig von der Einstellung der Vorwärmtemperatur wird vom Steuermittel 40 vorrangig der mit der kühleren Heizstufe 36 verbundene Wärmetauscher 66, 70 ausgelastet, so dass möglichst wenig hochtemperierter Wärmeträger abgekühlt und dem Dampfprozess möglichst wenig nutzbare Wärme entzogen wird. So wird der Brennstoff falls möglich vollständig oder zumindest so weit wie möglich durch den kühleren Wärmetauscher 66, 70 erwärmt, und der heißere Wärmetauscher 68, 72 wird nur dazu verwendet, die Brennstofftemperatur weiter zu erhöhen bzw. heißeren Brennstoff zum Zumischen zum durch den Wärmetauscher 70 maximal möglich erwärmten Brennstoff zur Verfügung zu stellen. Entsprechend werden die Ströme von Vorwärmmedium durch die Wärmetauscher 66, 68, bzw. die Brennstoffströme durch die Wärmetauscher 70, 72 von dem Steuermittel 40 eingestellt.

Ein weiteres Steuerprogramm des Steuermittels 40 ermöglicht ein Selbstlernen des Steuermittels 40 bei der Einstellung der Vorwärmtemperatur. Die mit Hilfe eines Messergebnisses feineingestellte Vorwärmtemperatur wird jeweils mit herrschenden Betriebsparametern der Feuerungsanlage 12 oder der GuD-Anlage 2 verknüpft. Wird zu einem späteren Zeitpunkt ein hinsichtlich der Betriebsparameter gleicher oder ähnlicher Betriebspunkt erreicht, wird die abgelegte Vorwärmtemperatur eingeregelt und ggf. durch weitere Messungen erneut noch feiner eingestellt.

Bei den beschriebenen Verfahren kann der Brennstoff bereits bei einem Anfahren der Feuerungsanlage 12 entsprechend hinterlegten Daten, beispielsweise mit Hilfe einer Größe eines Anfahrparameters der Feuerungsanlage 12, und/oder Messergebnissen vorgewärmt werden, so dass ein hoher Wirkungsgrad der Feuerungsanlage 12 zügig erreicht wird.

## Patentansprüche

1. Verfahren zum Betrieb einer Feuerungsanlage (12) mit einer Brennkammer (20), bei dem ein Brennstoff vorgewärmt wird und vorgewärmt einer Verbrennung in der Brennkammer (20) zugeführt wird, **dadurch gekennzeichnet, dass** die Vorwärmtemperatur des Brennstoffs in Abhängigkeit einer sich aus der Verbrennung ergebenden Größe eingestellt wird.

2. Verfahren nach Anspruch 1,
**dadurch gekennzeichnet, dass** die sich aus der Verbrennung ergebende Größe eine Last der Feuerungsanlage (12) ist.

3. Verfahren nach Anspruch 1 oder 2,
**dadurch gekennzeichnet, dass** die Vorwärmtemperatur des Brennstoffs bei einer Teillast der Feuerungsanlage (12) höher eingestellt wird als bei einer Grundlast.

4. Verfahren nach einem der vorhergehenden Ansprüche,
**dadurch gekennzeichnet, dass** die Vorwärmtemperatur des Brennstoffs in Abhängigkeit von einer Flammstabilität in der Brennkammer (20) eingestellt wird.

5. Verfahren nach einem der vorhergehenden Ansprüche,
**dadurch gekennzeichnet, dass** die Vorwärmtemperatur des Brennstoffs grundsätzlich auf einen maximal möglichen Wert unter Einhaltung einer vorbestimmten Flammstabilität eingestellt wird.

6. Verfahren nach einem der vorhergehenden Ansprüche,
**dadurch gekennzeichnet, dass** der Brennstoff bereits bei einem Anfahren der Feuerungsanlage (12) erwärmt wird und die sich aus der Verbrennung ergebende Größe eine Größe eines Anfahrparameters der Feuerungsanlage (12) ist.

7. Verfahren nach einem der vorhergehenden Ansprüche,
**dadurch gekennzeichnet**, die Vorwärmtemperatur des Brennstoffs in einem ersten Schritt in Abhängigkeit einer hinterlegten Zuordnung voreingestellt wird und in einem zweiten Schritt mit Hilfe eines Messergebnisses feineingestellt wird.

8. Feuerungsanlage (12) mit einer Brennkammer (20) zur Verbrennung von Brennstoff, einer Brennstoffzuführung (60) zur Brennkammer (20) und einem Erwärmungsmittel (58, 88) zum Vorwärmen von die Brennstoffzuführung (60) durchströmendem Brennstoff, **gekennzeichnet durch** ein Steuermittel (40) zum Einstellen der Vorwärmtemperatur des Brennstoffs in Abhängigkeit einer sich aus der Verbrennung ergebenden Größe.

9. Feuerungsanlage (12) nach Anspruch 8,
**dadurch gekennzeichnet, dass** das Erwärmungsmittel (58, 88) mindestens zwei in der Brennstoffzuführung (60) angeordnete Wärmetauscher (66, 68, 70, 72) aufweist, die mit Heizstufen (36, 50, 52) unterschiedlicher Betriebstemperatur (T₁, T₂) verbunden sind.

10. Feuerungsanlage (12) nach Anspruch 9,
**dadurch gekennzeichnet, dass** die Wärmetauscher (66, 68) seriell in der Brennstoffzuführung (60) angeordnet sind.

11. Feuerungsanlage (12) nach Anspruch 9 oder 10,
**dadurch gekennzeichnet, dass** der mit der kühleren Heizstufe (36) verbundene Wärmetauscher (66) im Brennstoffstrom (60) vor dem mit der wärmeren Heizstufe (50) verbundenen Wärmetauscher (68) angeordnet ist.

12. Feuerungsanlage (12) nach Anspruch 9,
**dadurch gekennzeichnet, dass** die Wärmetauscher (70, 72) parallel in der Brennstoffzuführung (60) angeordnet sind.

13. Feuerungsanlage (12) nach Anspruch 12,
**dadurch gekennzeichnet, dass** die Brennstoffzuführung (60) zumindest zwei parallele, jeweils einen Brennstoffteilstrom zu einem der Wärmetauscher (70, 72) führende Leitungen (90, 92) aufweist und die Brennstoffteilströme durch die Leitungen (90, 92) nach den Wärmetauschern (70,72) vereinigt werden.

14. Feuerungsanlage (12) nach einem der Ansprüche 9 bis 13,
**dadurch gekennzeichnet, dass** das Steuermittel (40) dazu vorgesehen ist, vorrangig den mit der kühleren Heizstufe (36) verbundenen Wärmetauscher (66, 70) auszulasten und den anderen Wärmetauscher (68, 72) zur weiteren Erwärmung des Brennstoffs heranzuziehen.

15. Feuerungsanlage (12) nach einem der Ansprüche 8 bis 14,
**dadurch gekennzeichnet, dass** das Steuermittel (40) bezüglich der Steuerung der Vorwärmtemperatur selbstlernend ist.
